# EUROPEAN PATENT APPLICATION

(11) **EP 4 471 315 A1**
(43) Date of publication of application: **04.12.2024**
(21) Application number: 22924293.8
(22) Date of filing: 17.06.2022
(51) Int. Cl.: F17C 3/02, F17C 3/00, F17C 6/00, F17C 9/00, F17C 13/02, B01D 53/14, B01D 53/78

(54) **CARBON DIOXIDE CAPTURE AND REACTION PRODUCT STORING SYSTEM**

(30) Priority: 25.01.2022 KR 20220010642
(71) Applicant: Lowcarbon Co., Ltd., Seongjeon-myeon, Gangjin-gun Jeollanam-do 59205 (KR)
(72) Inventor: LEE, Cheol, Chungcheongbuk-do 28709 (KR)
(74) Representative: M. Zardi & Co S.A.
(86) International application number: PCT/KR2022/008614
(87) International publication number: WO 2023/146037

(57) **Abstract**

Proposed is a carbon dioxide capture and reaction product storing system. The system includes a carbon dioxide capture and carbon utilization apparatus configured to receive an exhaust gas, to capture carbon dioxide by reacting the exhaust gas with a basic alkaline mixture solution, to collect a reaction product containing the captured carbon dioxide, and to separate a carbon dioxide reaction product and a waste solution from the reaction product, and includes a storage tank configured to accommodate the carbon dioxide reaction product, the storage tank having a double wall structure of an inner wall and an outer wall. Furthermore, the system includes an inlet unit configured to load the carbon dioxide reaction product into the storage tank, a discharge unit configured to unload the carbon dioxide reaction product in the storage tank, and a control unit configured to control the inlet unit or the discharge unit.

## Description

### Technical Field

The present disclosure relates to a carbon dioxide capture and reaction product storing system. More particularly, the present disclosure relates to a carbon dioxide capture and reaction product storing system using a basic alkaline mixture solution, the system being capable of stably and efficiently storing and using a carbon resource in consideration of an environment, the carbon resource being a reaction product due to capture of carbon dioxide in an exhaust gas.

### Background Art

Recently, as global discussions on greenhouse gas reduction are more active than ever, global efforts to reduce carbon dioxide generation have been made as carbon dioxide (CO₂) has been designated as a greenhouse gas that causes global warming.

As an example, in order to prevent global warming by limiting the emission of greenhouse gases such as carbon dioxide and so on, the United Nations Framework Convention on Climate Change agreement was concluded in June 1992. According to the agreement, countries that have agreed to the United Nations Framework Convention on Climate Change are required to investigate the emissions and removal amounts of all greenhouse gases, including carbon dioxide, excluding chlorofluorocarbon (CFC), and to report the emissions and removal amounts to a negotiation committee, and also to draw up a national plan to prevent climate change.

In addition, recently, there has been a market in which carbon dioxide emissions are allocated to individual institutions, companies, households, and so on, and in which the right to emit such carbon dioxide is traded. Furthermore, there is an active movement to reduce carbon dioxide emissions generated by burning fuel and so on by Carbon Capture, Utilization, and Storage (CCUS).

At the same time, interest in carbon dioxide storage apparatuses is also increasing, but a conventional carbon dioxide storage apparatus is required to have a pressure tank that is configured to maintain carbon dioxide in high-pressure and low-temperature state after compressing and cooling carbon dioxide so that carbon dioxide is in a liquid state or a supercritical state, so that a large cost is required for manufacturing the conventional carbon dioxide storage apparatus.

Specifically, in a general pressure tank, a pressure vessel of 100 bar or less is usually used. However, when the pressure inside the pressure tank increases, a damage (crack or pitting) of the pressure tank may occur. Therefore, there is a problem that a pressure tank designed to maintain carbon dioxide in a high pressure state is required to be manufactured.

In addition, since carbon dioxide is compressed several hundreds of times more than gas when carbon dioxide is liquefied, there is a problem that carbon dioxide is required to be accommodated and transported in a pressure tank designed to maintain an internal pressure when a large volume of carbon dioxide is transported.

In addition, carbon dioxide liquefied by compressing and cooling is not in the same temperature range as a cryogenic fluid such as liquefied natural gas or liquid nitrogen, but there are many points to be aware of pressure changes and phase changes when carbon dioxide is input into a storage tank after transport.

In addition, when the liquefied carbon dioxide is discharged from the pressure tank to the storage tank, a connection part of a pipe connected to the storage is damaged due to a sudden change in pressure, or a problem such as freezing of the inside and the outside of the pipe from occurring due to the transported liquid carbon dioxide passing through the pipe, thereby hindering the smooth transport.

In addition, although the cost of re-liquefaction of carbon dioxide is very high, there is a problem that carbon dioxide cannot be used for fuel and power generation.

Meanwhile, as a carbon dioxide capture technology has recently been developed, carbon dioxide capture products have been generated, but technology for storing generated carbon dioxide capture products have not yet been developed, so that technology development is required.

### Disclosure

### Technical Problem

Accordingly, the present disclosure has been made keeping in mind the above problems occurring in the related art, and an objective of the present disclosure is to provide a carbon dioxide capture and reaction product storing system using a basic alkaline mixture solution, the system being configured such that carbon dioxide in an exhaust gas is captured and converted into a carbon resource and then the converted carbon resource is capable of being stored and utilized in a carbon dioxide reaction product storing system suitable for each environment on the ground, in the ground, and in the sea.

In addition, another objective of the present disclosure is to provide a carbon dioxide capture and reaction product storing system capable of stably and efficiently storing a carbon resource in a space larger than a conventional carbon dioxide storage apparatus, the carbon resource being a carbon dioxide capture reaction product. Furthermore, at the same time, the system is configured such that a manufacturing cost, an operation cost, and a transportation cost are reduced, and is also configured such that the stored carbon resource is capable of being used later when the stored carbon resource is required.

The technical problems to be solved by the present disclosure are not limited to the above-mentioned problems, and other problems which are not mentioned will be clearly understood by those skilled in the art from the following description.

### Technical Solution

In order to achieve the above objectives, according to a first embodiment of the present disclosure, there is provided a carbon dioxide capture and reaction product storing system, the system including: a carbon dioxide capture and carbon utilization apparatus configured to receive an exhaust gas, to capture carbon dioxide by reacting the exhaust gas with a basic alkaline mixture solution, to collect a reaction product containing the captured carbon dioxide, and to separate a carbon dioxide reaction product and a waste solution from the reaction product; a storage tank configured to accommodate the carbon dioxide reaction product separated by the carbon dioxide capture and carbon utilization apparatus, the storage tank having a double wall structure of an inner wall and an outer wall; an inlet unit connected to the storage tank and configured to load the carbon dioxide reaction product into the storage tank; a discharge unit connected to the storage tank and configured to unload the carbon dioxide reaction product in the storage tank; and a control unit configured to control the inlet unit or the discharge unit during loading/unloading of the carbon dioxide reaction product.

In addition, the carbon dioxide reaction product may include bicarbonate in a liquid state or a gel state.

In addition, the inlet unit may include: an inlet valve configured to open and close a flow path for the carbon dioxide reaction product that is loaded inside the storage tank, thereby adjusting a flow rate of the carbon dioxide reaction product that is loaded; an inlet flow rate sensor configured to measure the carbon dioxide reaction product loaded by the inlet valve and to generate a flow rate value; and an inlet line connected to the storage tank so as to load the carbon dioxide reaction product.

In addition, the discharge unit may include: a discharge line connected to the storage tank and configured to unload the carbon dioxide reaction product to an outside of the storage tank; a discharge pump provided on the discharge line and configured to forcibly unload the carbon dioxide reaction product contained in the storage tank to the outside; a discharge valve configured to open and close a flow path toward the discharge pump for the carbon dioxide reaction product accommodated in the storage tank; and a vacuum pump connected to the discharge line between the storage tank and the discharge valve and configured to discharge air in the storage tank to the outside and to form a vacuum state.

In addition, the inner wall of the storage tank may include: a level sensor configured to measure a level of the carbon dioxide reaction product loaded in the storage tank and to input a sensing value to the control unit; and a pressure sensor configured to measure a pressure of the storage tank and to input a sensing value to the control unit.

In addition, when the sensing value of the level sensor falls below a predetermined value, the control unit may control the inlet valve such that the inlet valve is opened so that the carbon dioxide reaction product is loaded through the inlet line.

In addition, when the sensing value of the level sensor reaches a predetermined target level value or when a flow rate value measured by the inlet flow rate sensor reaches a predetermined target flow rate, the control unit may close the inlet valve so that the flow path introduced into the storage tank is blocked.

In addition, when the control unit receives a discharge signal of the carbon dioxide reaction product accommodated inside the storage tank, the control unit may control the discharge valve and the discharge pump so that the discharge valve is opened and the discharge pump is operated.

In addition, when the flow path of the carbon dioxide reaction product loaded inside the storage tank is opened and closed according to a flow path opening and closing operation of the inlet valve, the vacuum state inside the storage tank may be released, so that the control unit may drive the vacuum pump so that the sensing value of the pressure sensor reaches a target vacuum pressure.

In order to achieve the above objectives, according to a second embodiment of the present disclosure, there is provided a carbon dioxide capture and reaction product storing system, the system including: a carbon dioxide capture and carbon utilization apparatus configured to receive an exhaust gas, to capture carbon dioxide by reacting the exhaust gas with a basic alkaline mixture solution, to collect a reaction product containing the captured carbon dioxide, and to separate a carbon dioxide reaction product and a waste solution from the reaction product; an underground reservoir accommodating the carbon dioxide reaction product separated from the carbon dioxide capture and carbon utilization apparatus; an inlet unit connected to the underground reservoir and configured to load the carbon dioxide reaction product into the underground reservoir; a discharge unit connected to the underground reservoir and configured to unload the carbon dioxide reaction product in the underground reservoir; a control unit configured to control the inlet unit or the discharge unit during loading/unloading of the carbon dioxide reaction product that is accommodated in the underground reservoir; and a filter configured to filter out impurities other than the carbon dioxide reaction product during the loading/unloading of the carbon dioxide reaction product.

In addition, the carbon dioxide reaction product may include bicarbonate in a liquid state or a gel state.

In addition, the inlet unit may include: an inlet valve configured to open and close a flow path for the carbon dioxide reaction product that is loaded inside the underground reservoir, thereby adjusting a flow rate of the carbon dioxide reaction product that is loaded; and an inlet line connected to the underground reservoir so as to load the carbon dioxide reaction product.

In addition, the discharge unit may include: a discharge line connected to the underground reservoir and configured to unload the carbon dioxide reaction product to an outside of the underground reservoir; a discharge pump provided on the discharge line and configured to forcibly unload the carbon dioxide reaction product contained in the underground reservoir to the outside; a discharge valve configured to open and close a flow path toward the discharge pump for the carbon dioxide reaction product accommodated in the underground reservoir; and a vacuum pump connected to the discharge line between the underground reservoir and the discharge valve and configured to discharge air in the underground reservoir to the outside and to form a vacuum state.

In addition, a first distal end of the inlet unit or a first distal end of the discharge unit may be buried in the underground reservoir.

In addition, the underground reservoir may be formed at a depth of 5 m to 20 m underground from a land and may be not affected by an outside air, so that the underground reservoir may have a constant temperature of 12 degrees Celsius to 16 degrees Celsius.

In order to achieve the above objectives, according to a third embodiment of the present disclosure, there is provided a carbon dioxide capture and reaction product storing system, the system including: a carbon dioxide capture and carbon utilization apparatus configured to receive an exhaust gas, to capture carbon dioxide by reacting the exhaust gas with a basic alkaline mixture solution, to collect a reaction product containing the captured carbon dioxide, and to separate a carbon dioxide reaction product and a waste solution from the reaction product; an offshore structure provided with a storage tank accommodating the carbon dioxide reaction product separated from the carbon dioxide capture and carbon utilization apparatus; an inlet unit connected to the storage tank of the offshore structure and configured to load the carbon dioxide reaction product into the storage tank of the offshore structure; a discharge unit connected to the storage tank of the offshore structure and configured to unload the carbon dioxide reaction product accommodated in the storage tank; and a control unit configured to control the inlet unit or the discharge unit during loading/unloading of the carbon dioxide reaction product accommodated in the storage tank.

In addition, the carbon dioxide reaction product may include bicarbonate in a liquid state or a gel state.

In addition, the inlet unit may include: an inlet valve configured to open and close a flow path for the carbon dioxide reaction product that is loaded inside the storage tank, thereby adjusting a flow rate of the carbon dioxide reaction product that is loaded; an inlet flow rate sensor configured to measure the carbon dioxide reaction product loaded by the inlet valve and to generate a flow rate value; and an inlet line connected to the storage tank so as to load the carbon dioxide reaction product.

In addition, the discharge unit may include: a discharge line connected to the storage tank and configured to unload the carbon dioxide reaction product to an outside of the storage tank; a discharge pump provided on the discharge line and configured to forcibly unload the carbon dioxide reaction product contained in the storage tank to the outside; a discharge valve configured to open and close a flow path toward the discharge pump for the carbon dioxide reaction product accommodated in the storage tank; and a vacuum pump connected to the discharge line between the storage tank and the discharge valve and configured to discharge air in the storage tank to the outside and to form a vacuum state.

In addition, when a flow rate value measured by the inlet flow rate sensor reaches a predetermined target flow rate, the control unit may close the inlet valve so that the flow path introduced into the storage tank is blocked.

In addition, when the control unit receives a discharge signal of the carbon dioxide reaction product accommodated inside the storage tank, the control unit may control the discharge valve and the discharge pump so that the discharge valve is opened and the discharge pump is operated.

In addition, the offshore structure may be a floating structure, and may be any one selected from an LNG FPSO, an LNG FSRU, an LNG transport ship, and an LNG RV.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, carbon dioxide in an exhaust gas is captured and converted into a carbon resource by using a basic alkaline mixture solution, and then the converted carbon resource is capable of being stored and utilized in the carbon dioxide reaction product storing system suitable for each environment on the ground, in the ground, and in the sea.

In addition, according to an embodiment of the present disclosure, a carbon resource that is a carbon dioxide capture reaction product is capable of being stably and efficiently stored in a space larger than a conventional carbon dioxide storage apparatus the carbon resource being a carbon dioxide capture reaction product and, at the same time, the manufacturing cost, the operation cost, and the transportation cost are capable of being reduced and also the stored carbon resource is capable of being used later when the stored carbon resource is required.

In addition, according to an embodiment of the present disclosure, a Carbon Capture, Utilization, and Storage (CCUS) system may be realized. Specifically, bicarbonate in a liquid state or a gel state according to carbon dioxide capture may be utilized since bicarbonate that is a carbon dioxide reaction product converted by the carbon dioxide capture and carbon utilization apparatus capturing carbon dioxide is stably stored in a storage space and bicarbonate stored in the storage space is capable of being discharged to the outside when bicarbonate is required.

### Description of Drawings

FIG. 1 is a view illustrating a carbon dioxide capture and reaction product storing system according to a first embodiment of the present disclosure.
FIG. 2 is a view illustrating the carbon dioxide capture and reaction product storing system according to a second embodiment of the present disclosure.
FIG. 3 is a view illustrating an underground temperature distribution according to a depth from a general ground surface.
FIG. 4 is a view illustrating the carbon dioxide capture and reaction product storing system according to a third embodiment of the present disclosure.
FIG. 5 is a schematic view illustrating a carbon dioxide capture and carbon utilization apparatus according to an embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

The present disclosure relates to a carbon dioxide capture and reaction product storing system using a basic alkaline mixture solution, the system being configured such that carbon dioxide in an exhaust gas is captured and converted into a carbon resource and then the converted carbon resource is capable of being stored and utilized in a carbon dioxide reaction product storing system suitable for each environment on the ground, in the ground, and in the sea.

The carbon dioxide capture and reaction product storing system according to an embodiment of the present disclosure will be described in more detail with reference to the following drawings.

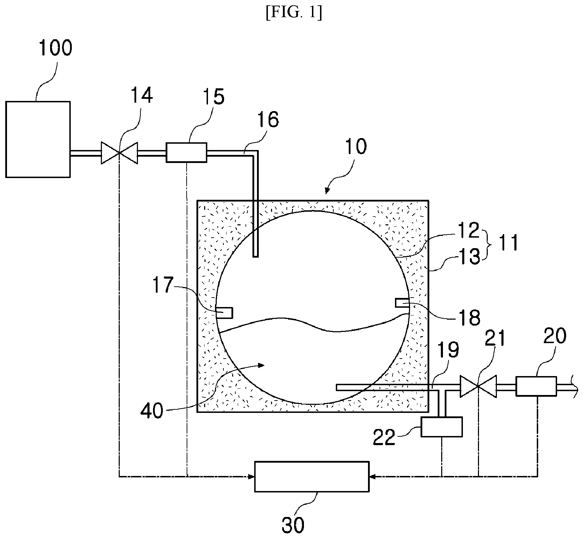

Referring to FIG. 1, the carbon dioxide capture and reaction product storing system according to a first embodiment of the present disclosure is a system capable of storing a carbon dioxide capture and reaction product in any environment regardless of environmental conditions on the ground, in the ground, and in the sea, but preferably is a carbon dioxide capture and reaction product storing system suitable for an environment on the ground. Furthermore, the carbon dioxide capture and reaction product storing system may include: a carbon dioxide capture and carbon utilization apparatus 100 configured to receive an exhaust gas, to capture carbon dioxide by reacting the exhaust gas with a basic alkaline mixture solution, and to convert carbon dioxide into a carbon resource; a storage tank 10 configured to receive and store a carbon dioxide reaction product converted into the carbon resource from the carbon dioxide capture and carbon utilization apparatus 100; an inlet unit 14, 15, and 16 and a discharge unit 19, 20, and 21 that are connected to the storage tank 10; and a control unit 30 configured to control the inlet unit or the discharge unit.

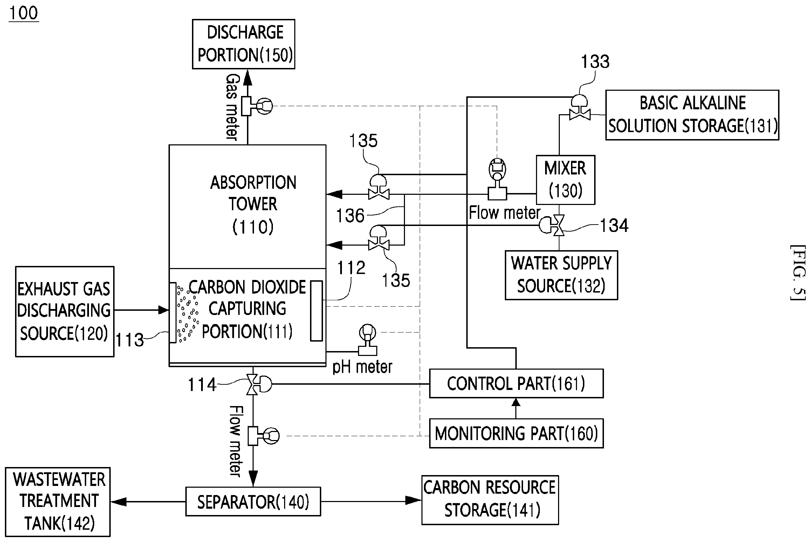

The carbon dioxide capture and carbon dioxide utilization apparatus 100 may receive an exhaust gas and may capture carbon dioxide in the exhaust gas by reacting the exhaust gas with the basic alkaline mixture solution, may collect a reaction product containing the captured carbon dioxide, and may separate a carbon dioxide reaction product and a waste solution from the reaction product. The carbon dioxide capture and carbon dioxide utilization apparatus 100 will be described in detail in FIG. 5 that will be described later.

The storage tank 10 has a tank body 11 formed in a double wall structure of an inner wall 12 and an outer wall 13, and an insulation material may be formed between the inner wall 12 and the outer wall 13. Through this, since a heat transfer rate transmitted to the inside or the outside of the storage tank 10 is minimized, a heat conservation function and an insulation function are increased accordingly, and the carbon dioxide reaction product in a liquid state or a gel state delivered from the carbon dioxide capture and carbon dioxide utilization apparatus 100 may be stored for a long time without being sensitive to the temperature change. The carbon dioxide reaction product is bicarbonate in a liquid state or a gel state, and may be maintained for a long time without a change in state at the room temperature in which an insulation state is maintained.

The storage tank 10 is a tank having a sealing and insulating wall such that bicarbonate in the liquid state or the gel state is capable of being stored, and may have a spherical shape or a square shape. Since a conventional storage tank stores carbon dioxide in a liquid state, the pressure in the tank is very high (at least a pressure of 5 atmospheric pressure or more), so that the conventional storage tank generally has a sphere shape in order to ensure the rigidity of the storage tank against the pressure. However, since the storage tank 10 according to the first embodiment of the present disclosure stores bicarbonate in the liquid state or the gel state at the room temperature, the storage tank 10 may have various shapes such as the spherical shape or the square shape.

The inner wall 12 of the storage tank 10 may include a level sensor 17 configured to measure a level of the carbon dioxide reaction product loaded in the storage tank 10 and to input a sensing value into the control unit 30, and may include a pressure sensor 18 configured to measure a pressure inside the storage tank 10 and to input a sensing value into the control unit 30.

The inlet unit is connected to the storage tank 10 and configured to load the carbon dioxide reaction product into the storage tank 10, and may include an inlet valve 14, an inlet flow rate sensor 15, and an inlet line 16.

The inlet valve 14 serves to adjust the flow rate of bicarbonate in the liquid state or the gel state loaded inside the storage tank 10. In addition, the inlet valve 14 may adjust the flow rate of bicarbonate loaded inside the storage tank 10 by the control unit 30 determining whether to open or close the inlet valve 14 on the basis of the sensing value for the level of the carbon dioxide reaction product measured by the level sensor 17.

The inlet flow rate sensor 15 may generate an inlet flow rate value by measuring the flow rate of bicarbonate in the liquid state or the gel state loaded inside the storage tank 10 through the inlet valve 14, and may transmit the generated inlet flow rate value to the control unit 30.

The inlet line 16 may include a pipe and so on capable of transporting bicarbonate in the liquid state or the gel state, and may be connected to the inside of the storage tank 10. A first distal end of the inlet line 16 may extend inside the storage tank 10.

Meanwhile, the discharge unit is connected to the storage tank 10 and configured to unload bicarbonate in the liquid state or the gel state pre-stored in the storage tank 10, and may include a discharge line 19, a discharge pump 20, a discharge valve 21, and a vacuum pump 22.

The discharge line 19 may include a pipe and so on capable of loading bicarbonate in the liquid state or the gel state pre-stored inside the storage tank 10 to the outside, and may be connected to the inside of the storage tank 10. A first distal end of the discharge line 19 may extend inside the storage tank 10.

The discharge pump 20 is provided on the discharge line 19, and provides a power to forcibly unload the bicarbonate contained in the storage tank 10 to the outside.

The discharge valve 21 may open and close a flow path toward the discharge pump 20 for the carbon dioxide reaction product stored in the storage tank 10 according to a control operation of the control unit 30. That is, the discharge valve 21 may be opened and closed so that the carbon dioxide reaction product is capable of being loaded to the outside.

The vacuum pump 22 is connected to the discharge line 19 between the storage tank 10 and the discharge valve 21, and may discharge air in the storage tank 10 to the outside according to the control operation of the control unit 30, thereby being capable of maintaining a vacuum state inside the storage tank 10.

The control unit 30 may be connected to the level sensor 17, the pressure sensor 18, the inlet unit 14, 15, and 16 and the discharge unit 19, 20, 21, and 22, and may control the operation of each component. In addition, the control unit 30 may control the inlet unit 14, 15, and 16 when the captured carbon dioxide reaction product that is bicarbonate in the liquid state or the gel state is loaded into the storage tank 10, or may control the discharge unit 19, 20, 21, and 22 when the captured carbon dioxide reaction product is unloaded from the storage tank 10 to the outside.

According to the first embodiment of the present disclosure, when the sensing value of the level sensor 17 mounted on the inner wall 12 of the storage tank 10 falls below a predetermined value, the control unit 30 determines that a level of the carbon dioxide reaction product stored in the storage tank 10 is less than a predetermined target level value, and may control such that the inlet valve 14 is opened according to the determination result so that the carbon dioxide reaction product is continuously loaded inside the storage tank 10 through the inlet line 16.

Meanwhile, when the sensing value of the level sensor 17 reaches the predetermined target level value or when a flow rate value measured by the inlet flow rate sensor 15 reaches a predetermined target flow rate, the control unit 30 determines that the target amount of carbon dioxide reaction product stored in the storage tank 10 has been filled, and the control unit 30 may further control such that the inlet valve 14 is closed according to the determination result and a flow path of introducing the carbon dioxide reaction product into the storage tank 10 is blocked so that bicarbonate that is the carbon dioxide reaction product is stopped from being loaded into the storage tank 10.

In addition, when the control unit 30 receives a discharge signal of the carbon dioxide reaction product stored inside the storage tank 10 from a manager terminal (not illustrated) configured to manage the carbon dioxide capture and reaction product storing system, the control unit 30 may control the discharge valve 21 and the discharge pump 20 such that the discharge valve 21 is opened and the discharge pump 20 is operated, thereby being capable of unloading the carbon dioxide reaction product stored inside the storage tank 10 to the outside.

In addition, when the flow path of the carbon dioxide reaction product loaded inside the storage tank 10 is opened and closed according to the flow path opening and closing operation of the inlet valve 14, the vacuum state inside the storage tank 10 is released, so that the control unit 30 may measure a pressure inside the storage tank 10 and may drive the vacuum pump 22 so that the sensing value of the pressure sensor 18 that inputs the sensing value to the control unit 30 reaches the target vacuum pressure.

Likewise, when the flow path of the carbon dioxide reaction product that is unloaded to the outside of the storage tank 10 is opened and closed according to the flow path opening and closing operation of the discharge valve 21, the vacuum state inside the storage tank 10 is released, so that the control unit 30 may measure a pressure inside the storage tank 10 and may drive the vacuum pump 22 so that the sensing value of the pressure sensor 18 that inputs the sensing value to the control unit 30 reaches the target vacuum pressure.

That is, the inside of the storage tank 10 may be maintained in the vacuum state by the vacuum pump 22. Therefore, even when the inlet valve 14 and the discharge valve 21 are opened and closed, the vacuum level inside the storage tank 10 is maintained, so that bicarbonate that is the carbon dioxide reaction product stored inside the storage tank 10 may be stored for a long time in the vacuum state without the change in state.

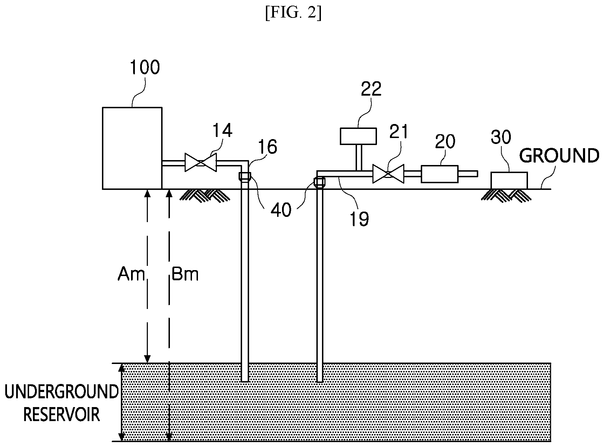

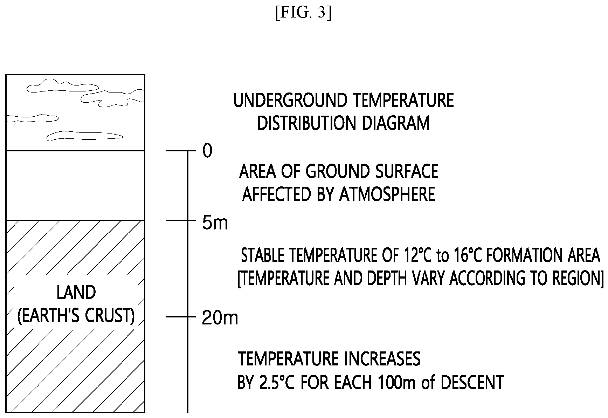

FIG. 2 is a view illustrating the carbon dioxide capture and reaction product storing system according to a second embodiment of the present disclosure, and FIG. 3 is a view illustrating an underground temperature distribution according to a depth from a general ground surface.

Referring to FIG. 2, the carbon dioxide capture and reaction product storing system according to the second embodiment of the present disclosure is a carbon dioxide capture and reaction product storing system suitable for an underground environment, and may include: the carbon dioxide capture and carbon utilization apparatus 100 configured to receive an exhaust gas, to capture carbon dioxide by reacting the exhaust gas with a basic alkaline mixture solution, and to convert carbon dioxide into a carbon resource; an underground reservoir D configured to receive and store a carbon dioxide reaction product converted into the carbon resource from the carbon dioxide capture and carbon utilization apparatus 100; the inlet unit 14 and 16 and the discharge unit 19, 20, 21, and 22 that are having first ends connected to the underground reservoir D; the control unit 30 configured to control the inlet unit or the discharge unit; and a filter 40 configured to filter out impurities other than the carbon dioxide reaction product during loading/unloading of the carbon dioxide reaction product.

The carbon dioxide capture and carbon dioxide utilization apparatus 100 may receive an exhaust gas and may capture carbon dioxide in the exhaust gas by reacting the exhaust gas with the basic alkaline mixture solution, may collect a reaction product containing the captured carbon dioxide, and may separate a carbon dioxide reaction product and a waste solution from the reaction product. The carbon dioxide capture and carbon dioxide utilization apparatus 100 will be described in detail in FIG. 5 that will be described later.

The underground reservoir D is a place in which a carbon dioxide reaction product separated by the carbon dioxide capture and carbon utilization apparatus 100 is accommodated and which is capable of being excavated in a natural terrain. Here, the carbon dioxide reaction product includes bicarbonate in the liquid state or the gel state.

As illustrated in FIG. 3, for example, the underground reservoir D may be formed at a depth of 5 m to 20 m underground from the land, so that the underground reservoir D may not be affected by external temperature. In addition, the underground reservoir D formed at the depth of 5 m to 20 m underground from the land may have a stable temperature of 12 degrees Celsius to 16 degrees Celsius, and may be formed in a natural environment without external shielding.

In addition, the underground reservoir D may be formed at a depth of Am but may be formed at a depth lower than Bm from the ground, and may be formed at different depths in which a stable room temperature of 12 degrees Celsius to 16 degrees Celsius is formed according to a region. This is to prevent the carbon dioxide reaction product that is bicarbonate from changing the state in a place where the temperature exceeds 50 degrees Celsius, and to store the carbon dioxide reaction product in the form of bicarbonate in the liquid state or the gel state over a wide area for a long time.

The inlet unit is connected to the underground reservoir D and serves to load the carbon dioxide reaction product separated from the carbon dioxide capture and carbon utilization apparatus 100 into the underground storing side D, and may include: the inlet valve 14 configured to open and close a flow path for the carbon dioxide reaction product loaded inside the underground reservoir D and to adjust the flow rate of the loaded carbon dioxide reaction product; and the inlet line 16 connected to the underground reservoir D such that the carbon dioxide reaction product is capable of being loaded into the underground reservoir D. Through the configuration of such an inlet unit, bicarbonate in the liquid state or the gel state that is the carbon dioxide reaction product separated from the carbon dioxide capture and carbon utilization apparatus 100 may be stored in the underground reservoir D.

The discharge unit serves to unload the carbon dioxide reaction product in the underground reservoir D, and may include: the discharge line 19 connected to the underground reservoir D and configured to unload the carbon dioxide reaction product to the outside of the underground reservoir D; the discharge pump 20 provided on the discharge line 19 and configured to forcibly unload the carbon dioxide reaction product stored in the underground reservoir D to the outside; the discharge valve 21 configured to open and close a flow path toward the discharge pump 20 for the carbon dioxide reaction product stored in the underground reservoir D; and the vacuum pump 22 connected to the discharge line 19 between the underground reservoir D and the discharge valve 21 and configured to form a vacuum state by discharging air in the underground reservoir D to the outside. Through the configuration of such a discharge unit, the carbon dioxide reaction product may be stably stored in the underground reservoir, and the pre-stored carbon dioxide reaction product may be acquired and used later when the carbon dioxide reaction product is required.

When the carbon dioxide reaction product is loaded into the underground reservoir D or when the carbon dioxide reaction product is unloaded from the underground reservoir D to the outside, the control unit 30 controls the inlet unit 14 and 16 and the discharge unit 19, 20, 21, and 22 so that the carbon dioxide reaction product having an appropriate flow rate is capable of being stored in the underground reservoir D or the carbon dioxide reaction product pre-stored in the underground reservoir D is capable of being discharged to the outside.

The filter 40 may be disposed in a path of the inlet line 16 or a path of the discharge line 19, and may have pores having a diameter of 10 *µ*m to 20 *µ*m formed in a size that allows penetration of the carbon dioxide reaction product, so that the filter 40 is capable of filtering out impurities other than the carbon dioxide reaction product during loading/unloading of the carbon dioxide reaction product.

Accordingly, the filter 40 performs a function of filtering out impurities other than the carbon dioxide reaction product when the carbon dioxide reaction product introduced from the carbon dioxide capture and carbon utilization apparatus 100 is loaded to the underground reservoir D or the carbon dioxide reaction product is unloaded from the underground reservoir D to the outside. Therefore, impurities other than the carbon dioxide reaction product are not mixed and may not be stored in the underground reservoir D, or only the carbon dioxide reaction product without impurities may be acquired when the carbon dioxide reaction product pre-stored in the underground reservoir D is unloaded to the outside.

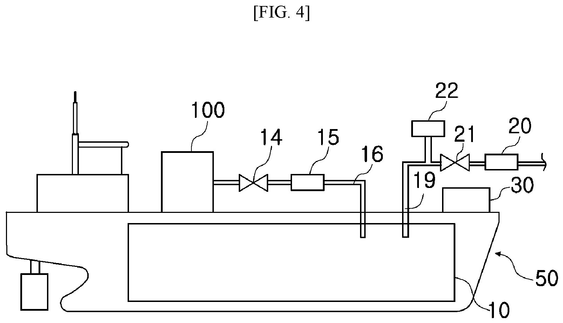

FIG. 4 is a view illustrating the carbon dioxide capture and reaction product storing system according to a third embodiment of the present disclosure.

Referring to FIG. 4, the carbon dioxide capture and reaction product storing system according to the third embodiment of the present disclosure is a carbon dioxide capture and reaction product storing system suitable for an environment in the sea, and may include: the carbon dioxide capture and carbon utilization apparatus 100 configured to receive an exhaust gas, to capture carbon dioxide by reacting the exhaust gas with a basic alkaline mixture solution, and to convert carbon dioxide into a carbon resource; an offshore structure 50 provided with the storage tank 10 configured to receive and store a carbon dioxide reaction product converted into the carbon resource from the carbon dioxide capture and carbon utilization apparatus 100; the inlet unit 14, 15, and 16 and the discharge unit 19, 20, and 21 that are having the first ends connected to the inside of the storage tank 10; and the control unit 30 configured to control the inlet unit or the discharge unit.

The carbon dioxide capture and carbon dioxide utilization apparatus 100 may receive an exhaust gas and may capture carbon dioxide in the exhaust gas by reacting the exhaust gas with the basic alkaline mixture solution, may collect a reaction product containing the captured carbon dioxide, and may separate a carbon dioxide reaction product and a waste solution from the reaction product. The carbon dioxide capture and carbon dioxide utilization apparatus 100 will be described in detail in FIG. 5 that will be described later. Here, the carbon dioxide reaction product may include bicarbonate in the liquid state or the gel state.

The offshore structure 50 is a floating offshore structure including a liquid transport carrier ship, but is not limited thereto, and may include any structure capable of performing various tasks such as floating or moving in the sea. Specifically, any one of an LNG FPSO, an LNG FSRU, an LNG transport ship, and an LNG RV may be selected as the offshore structure 50.

The storage tank 10 capable of storing the carbon dioxide reaction product that is bicarbonate in the liquid state or the gel state may be disposed inside the offshore structure 50. Furthermore, since the carbon dioxide reaction product that is bicarbonate in the liquid state or the gel state is stored in the storage tank 10, the storage tank 10 may be enlarged without a safety problem or a stability problem, and the storage tank 10 may have various shapes such as a spherical shape, a square shape, and so on.

Therefore, the storage tank 10 may be designed and manufactured according to a structural shape of a surrounding area where the storage tank 10 will be positioned in the offshore structure 50. Accordingly, space that has been wasted around a conventional storage tank such as a conventional storage tank having a spherical shape may be efficiently utilized.

In addition, since bicarbonate, which is the carbon dioxide reaction product, is capable of being easily stored by constructing the storage tank 10 that is enlarged according to the size of the offshore structure 50, a large amount of carbon dioxide is capable of being transported only with a single operation of the offshore structure 50, so that the transportation efficiency of the carbon dioxide reaction product is increased.

As illustrated in FIG. 1, the storage tank 10 has the tank body 11 formed in the double wall structure of the inner wall 12 and the outer wall 13, and the insulation material may be formed between the inner wall 12 and the outer wall 13. Through this, since a heat transfer rate transmitted to the inside or the outside of the storage tank 10 is minimized, a heat conservation function and an insulation function are increased accordingly, and the carbon dioxide reaction product in a liquid state or a gel state delivered from the carbon dioxide capture and carbon dioxide utilization apparatus 100 may be stored for a long time without being sensitive to the temperature change. The carbon dioxide reaction product is bicarbonate in a liquid state or a gel state, and may be maintained for a long time without a change in state at the room temperature in which an insulation state is maintained.

The inlet unit is connected to the storage tank 10 and configured to load the carbon dioxide reaction product into the storage tank 10, and may include the inlet valve 14, the inlet flow rate sensor 15, and the inlet line 16.

The inlet valve 14 serves to adjust the flow rate of bicarbonate in the liquid state or the gel state loaded inside the storage tank 10.

The inlet flow rate sensor 15 may generate an inlet flow rate value by measuring the flow rate of bicarbonate in the liquid state or the gel state loaded inside the storage tank 10 through the inlet valve 14, and may transmit the generated inlet flow rate value to the control unit 30.

The inlet line 16 may include a pipe and so on capable of transporting bicarbonate in the liquid state or the gel state, and may be connected to the inside of the storage tank 10. The first distal end of the inlet line 16 may extend inside the storage tank 10.

Meanwhile, the discharge unit is connected to the storage tank 10 and configured to unload bicarbonate in the liquid state or the gel state pre-stored in the storage tank 10, and may include the discharge line 19, the discharge pump 20, the discharge valve 21, and the vacuum pump 22.

The discharge line 19 may include a pipe and so on capable of loading bicarbonate in the liquid state or the gel state pre-stored inside the storage tank 10 to the outside, and may be connected to the inside of the storage tank 10. The first distal end of the discharge line 19 may extend inside the storage tank 10.

The discharge pump 20 is provided on the discharge line 19, and provides a power to forcibly unload the bicarbonate contained in the storage tank 10 to the outside.

The discharge valve 21 may open and close a flow path toward the discharge pump 20 for the carbon dioxide reaction product stored in the storage tank 10 according to a control operation of the control unit 30. That is, the discharge valve 21 may be opened and closed so that the carbon dioxide reaction product is capable of being unloaded to the outside.

The vacuum pump 22 is connected to the discharge line 19 between the storage tank 10 and the discharge valve 21, and may discharge air in the storage tank 10 to the outside according to the control operation of the control unit 30, thereby being capable of maintaining a vacuum state inside the storage tank 10.

The control unit 30 may be connected to the inlet unit 14, 15, and 16 and the discharge unit 19, 20, 21, and 22, and may control the operation of each component. In addition, the control unit 30 may control the inlet unit 14, 15, and 16 when the captured carbon dioxide reaction product that is bicarbonate in the liquid state or the gel state is loaded into the storage tank 10, or may control the discharge unit 19, 20, 21, and 22 when the captured carbon dioxide reaction product is unloaded from the storage tank 10 to the outside.

When the flow rate value measured by the inlet flow rate sensor 15 reaches the predetermined target flow rate, the control unit 30 may control the inlet valve 14 such that the inlet valve 14 is closed so that the flow path introduced into the storage tank 10 is blocked, thereby capable of stopping loading of bicarbonate that is the carbon dioxide reaction product into the storage tank 10. Conversely, when the flow rate value measured by the inlet flow rate sensor 15 does not reach the predetermined target flow rate, the control unit 30 may control the inlet valve 14 such that the inlet valve 14 is opened so that bicarbonate that is the carbon dioxide reaction product is continuously loaded into the storage tank 10.

In addition, when the control unit 30 receives a discharge signal of the carbon dioxide reaction product stored inside the storage tank 10 from a manager terminal (not illustrated) configured to manage the carbon dioxide capture and reaction product storing system, the control unit 30 may control the discharge valve 21 and the discharge pump 20 such that the discharge valve 21 is opened and the discharge pump 20 is operated, thereby being capable of loading the carbon dioxide reaction product stored inside the storage tank 10 to the outside.

According to the control operation of the inlet unit and the discharge unit of the control unit 30 as described above, the carbon dioxide reaction product in the liquid state or the gel state may be controlled such that the carbon dioxide reaction product is loaded into the storage tank 10 formed inside the offshore structure 50 or the carbon dioxide reaction product in the liquid state or the gel state is unloaded to the outside of the storage tank 10.

FIG. 5 is a schematic view illustrating the carbon dioxide capture and carbon utilization apparatus 100 according to an embodiment of the present disclosure.

Referring to FIG. 5, the carbon dioxide capture and carbon utilization apparatus 100 according to an embodiment of the present disclosure is a system configured to capture carbon dioxide in an exhaust gas by using a basic alkaline solution, the exhaust gas being discharged from the land or a ship. Furthermore, the carbon dioxide capture and carbon utilization apparatus 100 includes an absorption tower 110, a carbon dioxide capturing portion 111, an exhaust gas discharging source 120, a mixer 130, a separator 140, a carbon resource storage 141, and a discharge portion 150.

The absorption tower 110 may refer to a facility, a building, an equipment, and so on capturing carbon dioxide. In addition, the carbon dioxide capturing portion 111 positioned on a lower end of the absorption tower 110 is a portion of the absorption tower 110, and may refer to a portion that collects carbon dioxide by bubbling the exhaust gas.

The absorption tower 110 includes the carbon dioxide capturing portion 111 at the lower end of the absorption tower 110, and is configured to capture only carbon dioxide in an exhaust gas by reacting the basic alkaline mixture solution with the exhaust gas (micro bubbles of the exhaust gas). After carbon dioxide in the exhaust gas is captured, the exhaust gas in which carbon dioxide is removed may remain in a gaseous state in the absorption tower 110.

A nozzle is mounted on an upper portion of the absorption tower 110, the basic alkaline mixture solution is sprayed inside the absorption tower 110 through the nozzle, and the basic alkaline mixture solution is collected in the carbon dioxide capturing portion 111 positioned at the lower end of the absorption tower 110. At the same time as the basic alkaline mixture solution is sprayed, the exhaust gas supplied from the exhaust gas discharging source 120 passes through a bubbler 113 in the carbon dioxide capturing portion 111 at the lower portion of the absorption tower 110, the exhaust gas in which micro bubbles are formed is supplied, and the basic alkaline mixture solution and the micro bubbles of the exhaust gas react with each other within the carbon dioxide capturing portion 111, so that carbon dioxide is captured. When the exhaust gas reacts with the basic alkaline mixture solution, the micro bubbles are formed while the exhaust gas passes through the bubbler 113, the bubbler 113 having fine holes formed on an outlet of the exhaust gas discharging source 120.

As the exhaust gas supplied from the exhaust gas discharging source 120 passes through the bubbler 113, the bubbler 113 may form the micro bubbles in the exhaust gas. Furthermore, the smaller the size of the micro bubbles, the larger the reaction area of the exhaust gas and the alkaline solution, so that the carbon dioxide capture ability may be increased. For example, the micro bubbles may refer to bubbles which have a size about equal to or less than 50 *µ*m and which exist in an aqueous solution.

In addition, the absorption tower 110 may include a level indicator 112 inside the absorption tower 110, so that a level of a solution in the absorption tower 110 is capable of being detected.

The nozzle may include a plurality of nozzles, and may be formed of at least one stage. The nozzle is connected to the mixer 130, and may supply the basic alkaline mixture solution from the mixer 130.

The absorption tower 110 may be configured in series, in parallel, or in a series and parallel complex arrangement.

For example, the absorption tower 110 may be arranged in series when the flow velocity of the exhaust gas is high. When unreacted CO₂ is discharged from the absorption tower due to a high flow velocity, the absorption tower may be mounted in series so as to capture unreacted CO₂.

In addition, for example, the absorption tower 110 may be arranged in parallel when the flow rate of the exhaust gas is large. When the flow rate of the exhaust gas exceeds the amount that the absorption tower can capture, the amount of carbon dioxide that can be captured may be increased by arranging the absorption tower in parallel.

The exhaust gas discharging source 120 may utilize all gases that discharge carbon dioxide, for example, a rear end of a power plant exhaust gas or a rear end of an engine exhaust gas. In the present disclosure, the exhaust gas may be an exhaust gas discharged from a boiler of an offshore structure, an incinerator, an engine, and so on.

The mixer 130 mixes the basic alkaline solution supplied from a basic alkaline solution storage 131 with water supplied from a water supply source 132, and supplies the mixture to the nozzle of the absorption tower 110.

The basic alkaline mixture solution mixed with the basic alkaline solution and the water may be supplied by using a separately connected bypass line 136 when a supply amount or a required amount of the basic alkaline mixture solution is increased.

The basic alkaline solution and the water may be mixed in a ratio of 1:1 to 1:5. For example, the basic alkaline solution and the water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkaline mixture solution mixing ratio of the basic alkaline solution and the water is increased, but the mixing ratio of the water may be adjusted in consideration of the cost aspect.

The basic alkaline mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 132 may include all water that may be easily acquired at a system installation site and may be, for example, seawater.

An average pH of the basic alkaline mixture solution may be at least pH 12. For example, the pH may be pH 12 to pH 13.5, pH 12, pH 12.1, pH 12.2, or pH 12.3. The pH of the basic alkaline mixture solution may be measured by a pH meter in the absorption tower 110, and carbon dioxide cannot be captured anymore when the pH of the basic alkaline mixture solution in the absorption tower is less than pH 10.5. Therefore, in order to adjust the pH of the basic alkaline mixture solution, the amount of the basic alkaline solution and the amount of water may be adjusted from zero to 100% by each valve 133 and 134 and the basic alkaline solution and the water may be supplied to the mixer 130.

When the level of the basic alkaline mixture solution in the absorption tower 110 is lower than 90% (measured by the level indicator), the input may be adjusted through the valve 135 at the mixer 130 so that the basic alkaline mixture solution is input. Furthermore, when the level of the solution reaches 100%, the input of the solution may be stopped. At the same time, the basic alkaline solution and the water may be mixed until the pH of the basic alkaline mixture solution becomes pH 12 to pH 13.5.

Since the amount of basic alkaline mixture solution supplied to the absorption tower 110 and the amount of the solution discharged from the separator 140 are the same, the carbon dioxide capturing system is capable of being continuously maintained. Therefore, the valve (including a bypass valve if necessary) 135 is adjusted so that the same amount of the basic alkaline mixture solution as the flow meter value mounted in the line from the absorption tower 110 to the separator 140 is supplied to the absorption tower 110, thereby making the net flow to zero.

The reaction product containing carbon dioxide captured by reacting the basic alkaline mixture solution and the exhaust gas with each other is collected in the carbon dioxide capturing portion 111 of the absorption tower 110, the carbon dioxide reaction product and the waste solution from the reaction product are moved to the separator 140 through a valve 114, and the carbon dioxide reaction product and the waste solution are separated from the reaction product. For example, the separator 140 may be configured to perform the separation by using a centrifugal separation method.

The separated carbon dioxide reaction product may be moved to the carbon resource storage 141, and may be recycled so as to be utilized for other purposes. For example, the carbon dioxide reaction product may include sodium bicarbonate (NaHCO₃) that is bicarbonate in the liquid state or the gel state.

In the carbon dioxide capture and reaction product storing system according to an embodiment of the present disclosure, since securing of a place to store the carbon dioxide reaction product in the liquid state or the gel state is easily realized, the carbon dioxide reaction product may be separated and stored in the carbon resource storage so as to utilize the carbon dioxide reaction product into other useful materials.

As described in Formula 1 below, the carbon dioxide reaction product may be formed by reacting the basic alkaline mixture solution with carbon dioxide.

<Formula 1> 2NaOH + CO₂ → Na₂CO₃ + H₂O Na₂CO₃ + H₂O + CO₂ → 2NaHCO₃

In the reaction product, the waste solution other than the carbon dioxide reaction product is moved to a wastewater treatment tank 142 and then is discarded. For example, the waste solution may include illite minerals, water, and so on that are contained in the basic alkaline mixture solution that has finished a catalyst function.

The residual exhaust gas in which carbon dioxide is removed after carbon dioxide is captured in the carbon dioxide capturing portion 111 is discharged through the discharge portion 150. For example, the residual exhaust gas discharged through the discharge portion 150 may include the exhaust gas in which carbon dioxide is removed and may include some small amounts of uncaptured carbon dioxide.

At this time, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

The carbon dioxide capture and carbon utilization apparatus 100 may further include: a monitoring part 160 configured to monitor a level and a pH of the basic alkaline mixture solution in the absorption tower; and a control part 161 configured to adjust a supply amount of the basic alkaline mixture solution by the monitoring part 160.

Values of a gas meter, a pH meter, and a flow meter measured in all processes of the carbon dioxide capture and carbon utilization apparatus 100 are managed in the monitoring part 160, and the control part 161 performs adjustment on the basis of the values represented by the monitoring part 160. The valves 114, 133, 134, and 135 may be adjusted in percentage with respect to values input from the control part 161.

In the carbon dioxide capture and carbon utilization apparatus 100 according to the present disclosure, carbon dioxide may be reduced by capturing carbon dioxide in an exhaust gas, and bicarbonate in the liquid state or the gel state may be manufactured by using the captured carbon dioxide.

In addition, the carbon dioxide capture and reaction product storing system according to the present disclosure may be configured such that bicarbonate manufactured from the carbon dioxide capture and carbon utilization apparatus 100 is stably and efficiently stored and utilized according to each environment on the ground, in the ground, and in the sea, and may utilize bicarbonate in the liquid state or the gel state according to the capture of carbon dioxide by discharging bicarbonate stored in a storage space to the outside when bicarbonate is required. Accordingly, a Carbon Capture, Utilization, and Storage (CCUS) system capable of capturing, utilizing, and storing carbon dioxide may be realized.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

In the present disclosure, a carbon dioxide capture and reaction product storing system using a basic alkaline mixture solution may be provided, the system being configured such that carbon dioxide in an exhaust gas is captured and converted into a carbon resource and then the converted carbon resource is capable of being stored and utilized in a carbon dioxide reaction product storing system suitable for each environment on the ground, in the ground, and in the sea.

In addition, the carbon dioxide capture and reaction product storing system of the present disclosure may solve disadvantages of a conventional carbon dioxide storing apparatus.

In addition, the carbon dioxide capture and reaction product storing system capable of stably and efficiently storing a carbon dioxide reaction product generated from a carbon dioxide capture and carbon utilization apparatus in a larger space and, at the same time, capable of reducing manufacturing cost and operation cost compared to that of a conventional carbon dioxide storing apparatus and also capable of allowing the stored carbon resource to be used when the carbon resource is required may be provided.

In addition, a large amount of carbon dioxide reaction product may be stored, and the stability is excellent compared to that of a conventional storing apparatus using a high-pressure storage tank.

This is not only has sufficient potential for marketing or sales of a carbon dioxide capture and reaction product storing system for companies looking for introducing a Carbon Capture, Utilization, and Storage (CCUS) technology for companies that intend to introduce carbon dioxide capture, utilization, and storage (CCUS) technology, but is also feasible to the extent that the present disclosure is capable of being realized in reality, so that the present disclosure has industrial applicability.

## Claims

1. A carbon dioxide capture and reaction product storing system, the system comprising:
a carbon dioxide capture and carbon utilization apparatus configured to receive an exhaust gas, to capture carbon dioxide by reacting the exhaust gas with a basic alkaline mixture solution, to collect a reaction product containing the captured carbon dioxide, and to separate a carbon dioxide reaction product and a waste solution from the reaction product;
a storage tank configured to accommodate the carbon dioxide reaction product separated by the carbon dioxide capture and carbon utilization apparatus, the storage tank having a double wall structure of an inner wall and an outer wall;
an inlet unit connected to the storage tank and configured to load the carbon dioxide reaction product into the storage tank;
a discharge unit connected to the storage tank and configured to unload the carbon dioxide reaction product in the storage tank; and
a control unit configured to control the inlet unit or the discharge unit during loading/unloading of the carbon dioxide reaction product.

2. The system of claim 1, wherein the carbon dioxide reaction product comprises bicarbonate in a liquid state or a gel state.

3. The system of claim 1, wherein the inlet unit comprises:
an inlet valve configured to open and close a flow path for the carbon dioxide reaction product that is loaded inside the storage tank, thereby adjusting a flow rate of the carbon dioxide reaction product that is loaded;
an inlet flow rate sensor configured to measure the carbon dioxide reaction product loaded by the inlet valve and to generate a flow rate value; and
an inlet line connected to the storage tank so as to load the carbon dioxide reaction product.

4. The system of claim 1, wherein the discharge unit comprises:
a discharge line connected to the storage tank and configured to unload the carbon dioxide reaction product to an outside of the storage tank;
a discharge pump provided on the discharge line and configured to forcibly unload the carbon dioxide reaction product contained in the storage tank to the outside;
a discharge valve configured to open and close a flow path toward the discharge pump for the carbon dioxide reaction product accommodated in the storage tank; and
a vacuum pump connected to the discharge line between the storage tank and the discharge valve and configured to discharge air in the storage tank to the outside and to form a vacuum state.

5. The system of claim 1, wherein the inner wall of the storage tank comprises:
a level sensor configured to measure a level of the carbon dioxide reaction product loaded in the storage tank and to input a sensing value to the control unit; and
a pressure sensor configured to measure a pressure of the storage tank and to input a sensing value to the control unit.

6. The system of claim 3 or claim 5, wherein, when the sensing value of the level sensor falls below a predetermined value, the control unit controls the inlet valve such that the inlet valve is opened so that the carbon dioxide reaction product is loaded through the inlet line.

7. The system of claim 3 or claim 5, wherein, when the sensing value of the level sensor reaches a predetermined target level value or when a flow rate value measured by the inlet flow rate sensor reaches a predetermined target flow rate, the control unit closes the inlet valve so that the flow path introduced into the storage tank is blocked.

8. The system of claim 4, wherein, when the control unit receives a discharge signal of the carbon dioxide reaction product accommodated inside the storage tank, the control unit controls the discharge valve and the discharge pump so that the discharge valve is opened and the discharge pump is operated.

9. The system of any one of claim 3 to claim 5, wherein, when the flow path of the carbon dioxide reaction product loaded inside the storage tank is opened and closed according to a flow path opening and closing operation of the inlet valve, the vacuum state inside the storage tank is released, so that the control unit drives the vacuum pump so that the sensing value of the pressure sensor reaches a target vacuum pressure.

10. A carbon dioxide capture and reaction product storing system, the system comprising:
a carbon dioxide capture and carbon utilization apparatus configured to receive an exhaust gas, to capture carbon dioxide by reacting the exhaust gas with a basic alkaline mixture solution, to collect a reaction product containing the captured carbon dioxide, and to separate a carbon dioxide reaction product and a waste solution from the reaction product;
an underground reservoir accommodating the carbon dioxide reaction product separated from the carbon dioxide capture and carbon utilization apparatus;
an inlet unit connected to the underground reservoir and configured to load the carbon dioxide reaction product into the underground reservoir;
a discharge unit connected to the underground reservoir and configured to unload the carbon dioxide reaction product in the underground reservoir;
a control unit configured to control the inlet unit or the discharge unit during loading/unloading of the carbon dioxide reaction product that is accommodated in the underground reservoir; and
a filter configured to filter out impurities other than the carbon dioxide reaction product during the loading/unloading of the carbon dioxide reaction product.

11. The system of claim 10, wherein the carbon dioxide reaction product comprises bicarbonate in a liquid state or a gel state.

12. The system of claim 10, wherein the inlet unit comprises:
an inlet valve configured to open and close a flow path for the carbon dioxide reaction product that is loaded inside the underground reservoir, thereby adjusting a flow rate of the carbon dioxide reaction product that is loaded; and
an inlet line connected to the underground reservoir so as to load the carbon dioxide reaction product.

13. The system of claim 10, wherein the discharge unit comprises:
a discharge line connected to the underground reservoir and configured to unload the carbon dioxide reaction product to an outside of the underground reservoir;
a discharge pump provided on the discharge line and configured to forcibly unload the carbon dioxide reaction product contained in the underground reservoir to the outside;
a discharge valve configured to open and close a flow path toward the discharge pump for the carbon dioxide reaction product accommodated in the underground reservoir; and
a vacuum pump connected to the discharge line between the underground reservoir and the discharge valve and configured to discharge air in the underground reservoir to the outside and to form a vacuum state.

14. The system of claim 12 or claim 13, wherein a first distal end of the inlet unit or a first distal end of the discharge unit is buried in the underground reservoir.

15. The system of claim 10, wherein the underground reservoir is formed at a depth of 5 m to 20 m underground from a land and is not affected by an outside air, so that the underground reservoir has a constant temperature of 12 degrees Celsius to 16 degrees Celsius.

16. A carbon dioxide capture and reaction product storing system, the system comprising:
a carbon dioxide capture and carbon utilization apparatus configured to receive an exhaust gas, to capture carbon dioxide by reacting the exhaust gas with a basic alkaline mixture solution, to collect a reaction product containing the captured carbon dioxide, and to separate a carbon dioxide reaction product and a waste solution from the reaction product;
an offshore structure provided with a storage tank accommodating the carbon dioxide reaction product separated from the carbon dioxide capture and carbon utilization apparatus;
an inlet unit connected to the storage tank of the offshore structure and configured to load the carbon dioxide reaction product into the storage tank of the offshore structure;
a discharge unit connected to the storage tank of the offshore structure and configured to unload the carbon dioxide reaction product accommodated in the storage tank; and
a control unit configured to control the inlet unit or the discharge unit during loading/unloading of the carbon dioxide reaction product accommodated in the storage tank.

17. The system of claim 16, wherein the carbon dioxide reaction product comprises bicarbonate in a liquid state or a gel state.

18. The system of claim 16, wherein the inlet unit comprises:
an inlet valve configured to open and close a flow path for the carbon dioxide reaction product that is loaded inside the storage tank, thereby adjusting a flow rate of the carbon dioxide reaction product that is loaded;
an inlet flow rate sensor configured to measure the carbon dioxide reaction product loaded by the inlet valve and to generate a flow rate value; and
an inlet line connected to the storage tank so as to load the carbon dioxide reaction product.

19. The system of claim 16, wherein the discharge unit comprises:
a discharge line connected to the storage tank and configured to unload the carbon dioxide reaction product to an outside of the storage tank;
a discharge pump provided on the discharge line and configured to forcibly unload the carbon dioxide reaction product contained in the storage tank to the outside;
a discharge valve configured to open and close a flow path toward the discharge pump for the carbon dioxide reaction product accommodated in the storage tank; and
a vacuum pump connected to the discharge line between the storage tank and the discharge valve and configured to discharge air in the storage tank to the outside and to form a vacuum state.

20. The system of claim 18, wherein, when a flow rate value measured by the inlet flow rate sensor reaches a predetermined target flow rate, the control unit closes the inlet valve so that the flow path introduced into the storage tank is blocked.

21. The system of claim 19, wherein, when the control unit receives a discharge signal of the carbon dioxide reaction product accommodated inside the storage tank, the control unit controls the discharge valve and the discharge pump so that the discharge valve is opened and the discharge pump is operated.

22. The system of claim 16, wherein the offshore structure is a floating structure, and is any one selected from an LNG FPSO, an LNG FSRU, an LNG transport ship, and an LNG RV.
